# EUROPÄISCHE PATENTSCHRIFT

(11) **EP 2 215 614 B1**
(45) Veröffentlichungstag und Bekanntmachung des Hinweises auf die Patenterteilung: **11.05.2011**
(21) Anmeldenummer: 08853879.8
(22) Anmeldetag: 20.11.2008
(51) Int. Cl.: G08C 17/02, H04W 16/14

(54) **VERFAHREN ZUR ÜBERTRAGUNG VON DATEN ZWISCHEN EINER STEUEREINHEIT UND EINER VIELZAHL VON ABGESETZTEN E/A-EINHEITEN EINER AUTOMATISIERTEN ANLAGE**
METHOD FOR TRANSMITTING DATA BETWEEN A CONTROL UNIT AND A PLURALITY OF REMOTE I/O UNITS OF AN AUTOMATED INSTALLATION
PROCÉDÉ POUR LA TRANSMISSION DE DONNÉES ENTRE UNE UNITÉ DE COMMANDE ET UNE PLURALITÉ D'UNITÉS D'E/S DÉCENTRALISÉES D'UNE INSTALLATION AUTOMATISÉE

(30) Priorität: 27.11.2007 DE 102007058267
(43) Veröffentlichungstag der Anmeldung: 11.08.2010
(73) Patentinhaber: Pilz GmbH & Co. KG, 73760 Ostfildern (DE)
(72) Erfinder: INEICHEN, Alois, CH-6017 Ruswil (CH); GODAU, Thorsten, 73079 Suessen (DE); BAKOVIC, Daniel, 73729 Esslingen (DE)
(74) Vertreter: Witte, Weller & Partner
(86) Internationale Anmeldenummer: PCT/EP2008/009842
(87) Internationale Veröffentlichungsnummer: WO 2009/068223

(56) Entgegenhaltungen:
- EP-A1- 1 705 620
- US-A1- 2006 221 902

## Beschreibung

Die vorliegende Erfindung betrifft ein Verfahren zum Übertragen von Daten zwischen einer Steuereinheit und einer Vielzahl von abgesetzten E/A-Einheiten einer automatisierten Anlage, mit den Schritten:
- Versenden einer Vielzahl von Abfragetelegrammen von der Steuereinheit zu den E/A-Einheiten, und
- Versenden einer Vielzahl von Antworttelegrammen von den E/A-Einheiten an die Steuereinheit,
- wobei die Abfragetelegramme und die Antworttelegramme mit Hilfe von Hochfrequenzsignalen versendet werden, deren Sendefrequenz nach einem definierten Muster gewechselt werden.

Die Erfindung betrifft ferner eine automatisiert arbeitende Anlage mit einer Steuereinheit und mit einer Vielzahl von abgesetzten E/A-Einheiten, die nach einem solchen Verfahren Daten übertragen.

Ein solches Verfahren und eine solche Anlage sind aus einem Prospekt der Firma Phoenix Contact GmbH & Co. KG mit Sitz in 32823 Blomberg, Deutschland mit dem Titel "INTERFACE Wireless - Unidirektionale drahtlose Datenübertragung" bekannt.

Bei der industriellen Herstellung von Produkten gibt es seit vielen Jahren das Bestreben, die Prozessabläufe mehr und mehr zu automatisieren. Dies führt zu einer zunehmenden Vernetzung von Geräten und Komponenten, die an den Produktionsprozessen beteiligt sind. Typischerweise sind dies Sensoren zum Detektieren von Anlagen- oder Prozesszuständen, Aktoren, die eine Veränderung der Anlagen- oder Prozesszustände bewirken, und Steuereinheiten zum Erzeugen von Steuersignalen, mit denen die Aktoren in Abhängigkeit von den Sensorsignalen angesteuert werden. Bei kleinen Anlagen können die Sensoren und Aktoren direkt an die Steuereinheit angeschlossen sein. Bei größeren und weitläufigen Anlagen, die eine große Anzahl von Sensoren und Aktoren benötigen, verwendet man häufig abgesetzte E/A-Einheiten (Eingabe/Ausgabe), an die die Sensoren und Aktoren angeschlossen werden. Die E/A-Einheiten kommunizieren mit der Steuereinheit über Kommunikationsnetzwerke, die an die speziellen Anforderungen für solche Anwendungen angepasst sind, insbesondere im Hinblick auf die rauen Umgebungsbedingungen und den typischen Kommunikationsbedarf zwischen Steuereinheiten und abgesetzten Sensoren und Aktoren. Ein Beispiel für solche Kommunikationsnetzwerke sind Feldbusse wie der so genannte Profibus, der so genannte Interbus und der so genannte CAN-Bus. In der Regel verwenden diese Feldbusse elektrische und/oder optische Leitungen zur Vernetzung der angeschlossenen Einheiten.

Es gibt darüber hinaus seit einigen Jahren Bestrebungen, die Vernetzung von Geräten der Automatisierungstechnik auf Basis des bekannten Ethernet-Standards zu realisieren, der sich bei der Vernetzung von Personal Computern in Heim- und Büroanwendungen durchgesetzt hat. In diesem Zusammenhang gibt es auch Bestrebungen, die Verbindung zwischen den Einheiten drahtlos zu realisieren, was bei Heim- und Büronetzwerken mit Hilfe von WLAN schon häufig der Fall ist. Beispielsweise bietet die Firma Phoenix Contact GmbH & Co. KG in ihrer Produktlinie *Factory Line* WLAN-Kommunikationsgeräte zur drahtlosen Vernetzung von Geräten der Automatisierungstechnik an. Die Technologie von Heim- und Büronetzwerken ist allerdings nicht ohne weiteres auf Anwendungen in industriellen Produktionsumgebungen übertragbar, weil der Kommunikationsbedarf und die Umgebungsbedingungen unterschiedlich sind. So gibt es in Werkshallen häufig eine große Anzahl metallischer Gegenstände und bewegter Objekte, die die Ausbreitung von Funkwellen stark beeinflussen können. Andererseits muss die Kommunikation zwischen den Steuereinheiten und den Sensoren und Aktoren häufig in definierten, zyklisch wiederkehrenden Zeitintervallen erfolgen, um einen kontinuierlichen und störungsfreien Produktionsprozess zu ermöglichen. Dieser zyklische Datenverkehr wird erschwert, wenn die Funkverbindung durch andere Funkdienste gestört wird, insbesondere durch andere WLAN- und Bluetooth-Funknetze in räumlicher Nähe.

Um auch in einer gestörten Umgebung einen zuverlässigen Datenverkehr zwischen einer Steuereinheit und abgesetzten E/A-Einheiten zu ermöglichen, ist es bekannt, die Sendefrequenzen, mit denen die Datentelegramme zwischen den Einheiten übertragen werden, in regelmäßigen Abständen zu wechseln. Der eingangs genannte Prospekt der Firma Phoenix offenbart ein solches Verfahren, das als Frequency Hopping Spread Spectrum (FHSS) bezeichnet wird. Nach diesem Verfahren wechseln die Sender und Empfänger die Sendefrequenz nach einem definierten Muster, das in Form einer Frequenzsprungtabelle in allen beteiligten Einheiten gespeichert ist. Die Phoenix-Geräte wechseln die Sendefrequenzen stetig alle 27 ms. Wird ein Datentelegramm auf einer gestörten Sendefrequenz gesendet, geht dieses Datentelegramm verloren. Die folgende Übertragung auf der nächsten Sendefrequenz ermöglicht jedoch mit hoher Wahrscheinlichkeit eine erfolgreiche Datenübertragung.

Es ist darüber hinaus grundsätzlich bekannt, eine Frequenzsprungtabelle adaptiv an Umgebungsbedingungen anzupassen, indem häufig gestörte Sendefrequenzen zeitweilig ausgelassen werden (Adaptives FHSS = AFHSS).

Bei allen bekannten FHSS-Verfahren springen die Kommunikationsteilnehmer ständig von einer Sendefrequenz zur anderen. Dies hat den Nachteil, dass die Kommunikationsnetze selbst einen großen Teil des zur Verfügung stehenden, begrenzten Frequenzbandes belegen und folglich andere Funknetze stören können.

Vor diesem Hintergrund ist es eine Aufgabe der vorliegenden Erfindung, ein Verfahren und eine Vorrichtung der eingangs genannten Art anzugeben, wobei das zur Verfügung stehende Frequenzband effizient und mit möglichst geringen Störungen für benachbarte Funknetze genutzt wird. Außerdem sollen sich das neue Verfahren und die dafür benötigten Geräte einfach und kostengünstig realisieren lassen.

Diese Aufgabe wird nach einem Aspekt der Erfindung durch ein Verfahren der eingangs genannten Art gelöst, wobei die E/A-Einheiten den Empfang eines Abfragetelegramms innerhalb von definierten ersten Zeitintervallen erwarten, und wobei die Steuereinheit den Empfang von zumindest einem Antworttelegramm innerhalb von definierten zweiten Zeitintervallen erwartet, wobei die Steuereinheit und die E/A-Einheiten eine gewählte Sendefrequenz beibehalten, solange die Abfragetelegramme und Antworttelegramme innerhalb der definierten Zeitintervalle empfangen werden, und wobei die Steuereinheit und die E/A-Einheiten die Sendefrequenzen nach dem definierten Muster wechseln, wenn innerhalb der definierten Zeitintervalle kein erwartetes Telegramm empfangen wird.

Die Aufgabe wird nach einem weiteren Aspekt der Erfindung durch eine automatisiert arbeitende Anlage mit einer Steuereinheit und mit einer Vielzahl von abgesetzten Einheiten gelöst, wobei die Steuereinheit und die E/A-Einheiten eine gewählte Sendefrequenz beibehalten, solange die Abfragetelegramme und Antworttelegramme innerhalb der definierten Zeitintervalle empfangen werden, und wobei die Steuereinheit und die E/A-Einheiten die Sendefrequenzen nach dem definierten Muster wechseln, wenn innerhalb der definierten Zeitintervalle kein erwartetes Telegramm empfangen wird.

Das neue Verfahren verwendet also ein Frequenzsprungverfahren, nach dem die Sendefrequenzen für die Datenkommunikation nach einem definierten, im Vorhinein festgelegten Muster gewechselt werden. Im Unterschied zu den bekannten FHSS-Verfahren werden die definierten Frequenzsprünge allerdings nur dann ausgeführt, wenn die Datenkommunikation auf der gewählten Sendefrequenz nicht erfolgreich ist. Solange die Steuereinheit und die E/A-Einheiten die an sie adressierten Datentelegramme innerhalb der definierten Zeitintervalle zumindest so weit empfangen können, dass eine Decodierung der Information möglich ist, werden die aktuell gewählten Sendefrequenzen beibehalten. Infolgedessen verwendet das neue Verfahren bei erfolgreicher Datenkommunikation nur eine oder wenige Sendefrequenzen und das insgesamt zur Verfügung stehende Frequenzband kann von anderen Funknetzen ungestört genutzt werden. Das neue Verfahren geht daher sehr "sparsam" mit der begrenzten Ressource "Frequenz" um. Andererseits nutzt das neue Verfahren die vorteilhaften Eigenschaften von FHSS, wenn keine erfolgreiche Datenkommunikation zwischen der Steuereinheit und den abgesetzten E/A-Einheiten mit der aktuellen Frequenz möglich ist.

Das neue Verfahren macht sich zunutze, dass die Datenkommunikation bei der Steuerung von automatisierten Anlagen typischerweise in regelmäßigen Zeitintervallen erfolgt. Dies unterscheidet die Datenkommunikation einer automatisierten Anlage von anderen Kommunikationsanwendungen im Heim- und Bürobereich. Des Weiteren sind die zu übertragenden Datenmengen bei der Kommunikation in automatisierten Anlagen in der Regel relativ gering. Die Datenkommunikation einer automatisiert arbeitenden Anlage lässt sich daher gut vorhersagen und sie folgt einem zumindest weitgehend bekannten Verhalten.

Das neue Verfahren macht sich dieses determinierte Verhalten zunutze, indem ein Wechsel der Sendefrequenzen nach einem definierten Muster dadurch eingeleitet wird, dass ein erwartetes Datentelegramm, das innerhalb eines definierten Zeitintervalls eintreffen müsste, ausbleibt. Das Ausbleiben eines erwarteten Datentelegramms signalisiert also der wartenden Steuereinheit oder E/A-Einheit, dass ein Frequenzwechsel nach dem vorab festgelegten Muster sinnvoll ist und gestartet werden soll.

Dieser Frequenzwechsel wird nach dem neuen Verfahren jedoch nicht dauerhaft beibehalten, sondern nach vorab festgelegten Kriterien wieder angehalten, so dass nach einer Anzahl von Frequenzwechseln wieder eine Sendefrequenz für einen längeren Zeitraum beibehalten wird. Ein bevorzugtes Verfahren, wie die begonnenen Frequenzsprünge wieder beendet werden, ist weiter unten anhand bevorzugter Ausgestaltungen und Ausführungsbeispiele beschrieben.

Andererseits macht das neue Verfahren nicht lediglich einen einzigen Test auf einer neuen Frequenz, sondern es wendet das FHSS-Verfahren für den Zeitraum der gestörten Datenkommunikation an. Damit vereint das neue Verfahren die Vorteile von FHSS mit den Vorteilen eines Festfrequenzverfahrens. Um den Wechsel von FHSS zu der Verwendung einer Festfrequenz einfach und effizient zu gestalten, macht sich das neue Verfahren zunutze, dass das Ausbleiben eines erwarteten Datentelegramms auch eine Information darstellt, die auf einfache Weise an alle Kommunikationsteilnehmer "übertragen" werden kann. Infolgedessen kann das neue Verfahren recht einfach und kostengünstig implementiert werden. Andererseits nutzt das neue Verfahren das zur Verfügung stehende Frequenzband sehr effizient und in einer sehr zurückhaltenden, kooperativen Weise.

Die oben genannte Aufgabe ist daher vollständig gelöst.

In einer bevorzugten Ausgestaltung wechseln die Steuereinheit und die E/A-Einheiten die Sendefrequenzen nur dann nach dem definierten Muster, wenn innerhalb der definierten Zeitintervalle kein erwartetes Telegramm empfangen wird.

In dieser Ausgestaltung werden Frequenzwechsel nach dem definierten Muster ausschließlich zum Ausweichen auf eine andere Sendefrequenz verwendet, wenn auf der bisher verwendeten Sendefrequenz keine erfolgreiche Datenkommunikation möglich ist. Alternativ hierzu könnten Frequenzsprünge nach dem definierten Muster grundsätzlich auch anderweitig getriggert werden, beispielsweise mit Hilfe eines geeigneten Steuerbefehls, der von der Steuereinheit oder von einem Bediener an alle abgesetzten E/A-Einheiten übertragen wird. Die bevorzugte Ausgestaltung nutzt das zur Verfügung stehende Frequenzband in einer sehr effizienten und kooperativen Weise.

In einer weiteren Ausgestaltung wechseln die Steuereinheit und die E/A-Einheiten die Sendefrequenzen nur dann nach dem definierten Muster, wenn innerhalb mehrerer definierter Zeitintervalle kein erwartetes Telegramm empfangen wird.

In dieser Ausgestaltung besitzen die Steuereinheit und die E/A-Einheiten jeweils einen Fehlerzähler, mit dem die Anzahl ausgefallener Datentelegramme in aufeinander folgenden Zeitintervallen gezählt wird. Erst wenn in mehreren aufeinander folgenden Zeitintervallen keine erfolgreiche Datenübertragung möglich ist, wird das Frequenzsprungverfahren initiiert. Anders ausgedrückt wird eine definierte Anzahl von Telegrammausfällen toleriert, ohne dass das Frequenzsprungverfahren initiiert wird. Diese Ausgestaltung nutzt das zur Verfügung stehende Frequenzband noch effizienter und kooperativer, weil einzelne verlorene Datentelegramme noch nicht dazu führen, dass die Steuereinheit und die E/A-Einheiten zuvor nicht genutzte Teile des Frequenzbandes belegen.

In einer weiteren Ausgestaltung sendet die Steuereinheit die Abfragetelegramme in einer definierten Abfolge an die E/A-Einheiten, wobei die Steuereinheit das Versenden der Abfragetelegramme für eine definierte Zeitdauer einstellt, wenn ein erwartetes Antworttelegramm ausbleibt. Vorzugsweise sendet die Steuereinheit ein Abfragetelegramm jeweils an genau eine E/A-Einheit, so dass innerhalb der zyklisch wiederkehrenden Datenkommunikation immer nur eine E/A-Einheit mit der Steuereinheit kommuniziert. Des Weiteren ist es bevorzugt, wenn die definierte Abfolge, mit der die Steuereinheit Abfragetelegramme an die E/A-Einheiten sendet, konstant ist, d.h. die Steuereinheit sendet die Abfragetelegramme immer in der gleichen Reihenfolge an die Vielzahl der E/A-Einheiten.

In diesen Ausgestaltungen unterbricht die Steuereinheit die Datenkommunikation mit den E/A-Einheiten bewusst, um das Frequenzsprungverfahren in allen beteiligten E/A-Einheiten zu initiieren. Diese Ausgestaltung bewirkt auf sehr einfache und kostengünstige Weise, dass alle E/A-Einheiten des Systems mit Hilfe des definierten Musters auf eine neue Sendefrequenz wechseln, die anschließend von allen Einheiten verwendet wird.

In einer weiteren Ausgestaltung ist die definierte Zeitdauer zumindest gleich der Länge des zweiten Zeitintervalls multipliziert mit der Anzahl der E/A-Einheiten der definierten Abfolge minus 1. Vorzugsweise ist die definierte Zeitdauer in etwa gleich der Länge des zweiten Zeitintervalls multipliziert mit der Anzahl der E/A-Einheiten der definierten Abfolge minus 1.

In dieser Ausgestaltung unterbricht die Steuereinheit die Datenkommunikation mit den E/A-Einheiten so lange, dass sämtliche E/A-Einheiten, die von der Steuereinheit in der definierten Abfolge abgefragt werden, zu dem Frequenzsprungverfahren übergehen. Diese Ausgestaltung gewährleistet, dass alle an der Datenkommunikation beteiligten Einheiten nach dem definierten Muster zu neuen Sendefrequenzen wechseln. Das Verhalten der einzelnen E/A-Einheiten lässt sich auf diese Weise sehr einfach synchronisieren. Andererseits wird die Dauer der Frequenzsuche minimiert, wenn die definierte Zeitdauer kurz ist.

In einer weiteren Ausgestaltung sendet die Steuereinheit einen Frequenzwechselstoppbefehl an die E/A-Einheiten, wenn sie (die Steuereinheit) von allen angesprochenen E/A-Einheiten ein Antworttelegramm innerhalb der definierten zweiten Zeitintervalle empfangen hat. Vorzugsweise sendet die Steuereinheit den Frequenzwechselstoppbefehl als Bestandteil der zyklisch an die E/A-Einheiten versendeten Abfragetelegramme.

Diese Ausgestaltungen ermöglichen auf sehr einfache Weise, dass die abgesetzten E/A-Einheiten die Frequenzsprünge nach dem definierten Muster beenden, sobald die Datenübertragung zwischen der Steuereinheit und den E/A-Einheiten wieder störungsfrei funktioniert. Die Steuereinheit kann auf diese Weise alle "springenden" E/A-Einheiten wieder "einsammeln". Diese Ausgestaltung ist besonders vorteilhaft in Kombination mit den vorhergehenden Ausgestaltungen, wonach die Steuereinheit die E/A-Einheiten durch bewusste Unterdrückung von Abfragetelegrammen zu den Frequenzwechseln veranlasst, weil die Steuereinheit auf diese Weise das Verhalten aller beteiligten E/A-Einheiten beeinflussen kann. Die Steuereinheit kann also auf sehr einfache Weise dafür sorgen, dass alle beteiligten E/A-Einheiten zu dem Frequenzsprungverfahren wechseln, und sie kann das Frequenzsprungverfahren bei allen beteiligten E/A-Einheiten wieder beenden. Infolgedessen kann die Steuereinheit den Wechsel auf eine neue ungestörte oder weniger gestörte Sendefrequenz sehr einfach koordinieren.

In einer weiteren Ausgestaltung versendet die Steuereinheit ein Abfragetelegramm mit einer aktuellen Sendefrequenz nur, wenn die aktuelle Sendefrequenz frei ist.

In dieser Ausgestaltung prüft die Steuereinheit vor dem Versenden des Abfragetelegramms, ob die aktuell gewählte Sendefrequenz durch benachbarte Sender belegt bzw. gestört ist. Vorzugsweise verwendet die Steuereinheit also ihren Empfänger nicht nur zum Empfangen von Antworttelegrammen der E/A-Einheiten, sondern auch zum Prüfen, ob die aktuell gewählte Sendefrequenz verfügbar ist. Ein solches Prüfen des Funkkanals auf Verfügbarkeit ist bei Ethemet-Netzwerken unter der Bezeichnung Carrier Sense bekannt. Im Unterschied zu den Ethernet-Netzwerken prüft die Steuereinheit hier allerdings die Verfügbarkeit des Funkkanals im Hinblick auf Störungen durch andere Funknetze, nicht im Hinblick auf die Belegung durch andere Teilnehmer des eigenen Funknetzes. In bevorzugten Ausführungsbeispielen lässt die Steuereinheit das vorgesehene Abfragetelegramm ausfallen, wenn die Prüfung ergibt, dass die aktuell gewählte Sendefrequenz gestört ist. Auf diese Weise wird die E/A-Einheit, die mit dem ausgefallenen Abfragetelegramm angesprochen werden sollte, darüber informiert, dass die Sendefrequenz gestört ist. Die wartende E/A-Einheit beginnt dann in Abhängigkeit von dem Status ihres Fehlerzählers (sofern vorhanden) mit dem Frequenzsprungverfahren, oder sie wartet auf den nächsten Kommunikationszyklus mit einem ersten Zeitintervall, in dem sie ein weiteres Abfragetelegramm erhalten sollte.

Diese Ausgestaltungen tragen zu einer noch effizienteren und kooperativeren Nutzung des Frequenzbandes bei, weil die Steuereinheit Abfragetelegramme nur dann versendet, wenn auch eine Aussicht für eine erfolgreiche Datenkommunikation besteht. Eine unnötige Belastung der Umgebung mit erfolglos ausgesendeten Abfragetelegrammen wird vermieden.

In einer weiteren Ausgestaltung werden Sendefrequenzen, bei denen Antworttelegramme wiederholt ausbleiben, aus dem definierten Muster entfernt. Die genannten Sendefrequenzen können dauerhaft gelöscht oder nur für einen vorab definierten Zeitraum aus dem definierten Muster ausgeblendet werden. Vorzugsweise informiert die Steuereinheit die E/A-Einheiten mit Hilfe der Abfragetelegramme darüber, dass eine bestimmte Sendefrequenz aus dem definierten Muster entfernt werden soll. Die Steuereinheit und die E/A-Einheiten können die entsprechende Sendefrequenz dann aus der jeweils hinterlegten Frequenzsprungtabelle löschen oder ausblenden.

Diese Ausgestaltung verwendet ein an sich bekanntes adaptives Frequenzsprungverfahren in Kombination mit dem neuen Verfahren, wonach Frequenzwechsel nur bei Bedarf durchgeführt werden. Indem Sendefrequenzen, bei denen Antworttelegramme wiederholt ausbleiben, von der Steuereinheit aus dem definierten Muster entfernt werden, wird das zur Verfügung stehende Frequenzband noch effizienter und kooperativer genutzt.

In einer weiteren Ausgestaltung definiert das Muster eine Abfolge von verschiedenen Sendefrequenzen aus einer Gruppe von Sendefrequenzen, wobei die Sendefrequenzen in der Abfolge mit maximalen relativen Frequenzunterschieden angeordnet sind.

Diese Ausgestaltung hat zur Folge, dass die Steuereinheit und die E/A-Einheiten ihre gemeinsame Suche nach einer neuen Sendefrequenz in der Regel schneller beenden können. Wenn das Frequenzsprungverfahren aufgrund der gestörten Datenkommunikation initiiert wird, springen die Steuereinheit und die E/A-Einheiten auf solche Frequenzen, die von der zuvor gewählten, gestörten Sendefrequenz möglichst weit entfernt liegen. Störsignale, die mehrere benachbarte Kanäle beeinträchtigen, lassen sich daher schneller umgehen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer automatisierten Anlage nach einem Ausführungsbeispiel der Erfindung, und
- Fig. 2: eine schematische Darstellung zur Erläuterung des neuen Verfahrens.

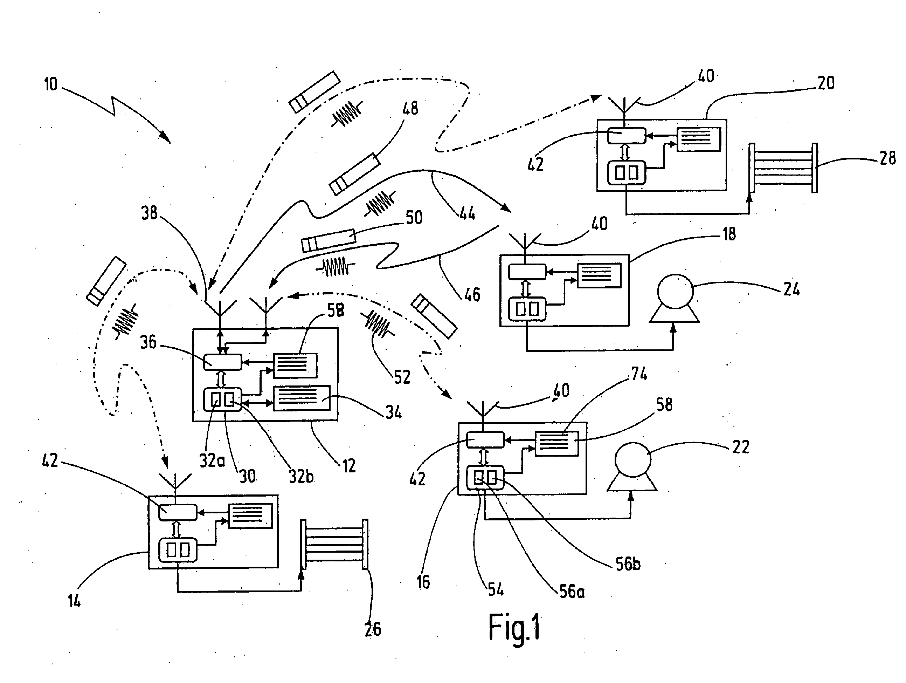

In Fig. 1 ist eine Anlage nach einem Ausführungsbeispiel der Erfindung insgesamt mit der Bezugsziffer 10 bezeichnet.

Die Anlage 10 besitzt eine Steuereinheit 12 und mehrere abgesetzte E/A-(Eingabe/Ausgabe)-Einheiten 14, 16, 18, 20. An die E/A-Einheiten 16 und 18 ist jeweils ein elektrischer Antrieb 22, 24 angeschlossen. Beispielsweise sind dies Antriebe für einen Roboter oder eine andere Maschine zur automatisierten Bearbeitung von Werkstücken (hier nicht dargestellt). Die Antriebe 22, 24 werden über die E/A-Einheiten 16, 18 mit Strom versorgt und können daher von den E/A-Einheiten 16, 18 abgeschaltet werden. An die E/A-Einheiten 14 und 20 ist jeweils eine Lichtschranke 26, 28 angeschlossen. Mit den Lichtschranken 26, 28 wird der Roboter und/oder die elektrische Maschine gegen gefährliche Eingriffe von außen gesichert. Die Lichtschranken 26, 28 sind typische Beispiele für Sensoren, deren Signalzustände von der Steuereinheit 12 eingelesen werden, um in Abhängigkeit davon Steuersignale zu erzeugen, mit denen die Antriebe 22, 24 abgeschaltet werden können.

Die Steuereinheit 12 und die E/A-Einheiten 14, 16, 18, 20 bilden hier zusammen ein sicherheitsrelevantes Steuerungssystem im Sinne der Normen EN 954-1, IEC 61508 und/oder EN ISO 13849-1. In bevorzugten Ausführungsbeispielen sind die Steuereinheit 12 und die E/A-Einheiten 14, 16, 18, 20 jeweils fehlersicher im Sinne der Kategorie 3 oder höher der EN 954-1 und/oder nach SIL 3 ausgebildet. Um dies zu erreichen, sind die sicherheitsrelevanten Teile der Steuereinheit 12 und der E/A-Einheiten 14, 16, 18, 20 redundant aufgebaut, und sie führen regelmäßige Funktionstests durch, um ein Abschalten der Antriebe 22, 24 auch bei Auftreten eines Fehlers sicherzustellen. In besonders bevorzugten Ausführungsbeispielen beinhaltet die Steuereinheit 12 darüber hinaus auch die Betriebssteuerung der Antriebe 22, 24, d.h. die Steuerung der normalen Arbeitsbewegungen des Roboters oder der Maschine. Grundsätzlich könnte die Steuereinheit 12 auch eine reine Betriebssteuerung sein, und die sicherheitsrelevanten Steuerfunktionen könnten durch eine weitere Steuereinheit (hier nicht dargestellt) gesteuert werden, die beispielsweise im Schaltschrank des Roboters oder der Maschine installiert ist.

Des weiteren ist es möglich, dass die Steuereinheit 12 eine abgesetzte Einheit in Bezug auf eine übergeordnete Steuereinheit (hier nicht dargestellt) ist. In einem Ausführungsbeispiel ist die Steuereinheit 12 eine E/A-Einheit, die gewissermaßen als Relaisstation für die weiteren E/A-Einheiten 14 bis 20 agiert. Auch in diesem Fall steuert die Steuereinheit 12 jedoch zumindest die Kommunikation mit den anderen E/A-Einheiten 14 bis 20.

In dem dargestellten Ausführungsbeispiel besitzt die Steuereinheit 12 einen Signal-und Datenverarbeitungsteil 30, der redundant aufgebaut ist. Der Signal- und Datenverarbeitungsteil 30 besitzt zwei Prozessoren 32a, 32b, die redundant zueinander arbeiten und sich gegenseitig überwachen. Die Prozessoren 32a, 32b können auf einen oder mehrere Speicher 34 zugreifen, in denen hier das Steuerprogramm für die Anlage 10 abgespeichert ist.

Die Steuereinheit 12 besitzt ferner eine Kommunikationsschnittstelle 36, die hier mit zwei Mikrowellenantennen 38a, 38b verbunden ist. In einem bevorzugten Ausführungsbeispiel sind die zwei Antennen zu einer Diversityantenne integriert, die in einer parallelen Patentanmeldung der Anmelderin mit dem Titel "Mikrowellenantenne zur drahtlosen Vernetzung von Geräten der Automatisierungstechnik" beschrieben ist. Die Antenne 38 könnte jedoch auch eine einfache Stabantenne oder eine geeignete Richtantenne sein. Der Signal- und Datenverarbeitungsteil 30 kommuniziert über die Kommunikationsschnittstelle 36 und die Antenne 38 mit den abgesetzten E/A-Einheiten 14, 16, 18, 20, um die Signalzustände der Sensoren 26, 28 einzulesen und die Steuerbefehle für die Antriebe 22, 24 auszugeben.

Jede E/A-Einheit 14, 16, 18, 20 besitzt eine Antenne 40 und eine Kommunikationsschnittstelle 42. Die E/A-Einheiten 14, 16, 18, 20 kommunizieren über die Antenne 40 und die Kommunikationsschnittstelle 42 mit der Steuereinheit 12, um die Sensorsignale zu übertragen und die Steuerbefehle zu empfangen. Zu diesem Zweck senden und empfangen die Kommunikationsschnittstellen 36, 42 hochfrequente Funksignale 44, 46. In einem Ausführungsbeispiel liegt die Frequenz der Funksignale 44, 46 im Bereich von 2,4 GHz. Jedes Funksignal besteht aus einer Vielzahl von zeitlich aufeinander folgenden Signalpaketen (so genannte Bursts), zwischen denen zeitliche Pausen liegen. Mit den hochfrequenten Signalpaketen werden Telegramme übertragen, in denen die Daten codiert sind, die zwischen der Steuereinheit 12 und den E/A-Einheiten 14, 16, 18, 20 ausgetauscht werden.

Insbesondere sendet die Steuereinheit 12 in regelmäßigen, definierten Abständen ein Abfragetelegramm 48 an jede E/A-Einheit 14, 16, 18, 20. Prinzipiell könnten die Abfragetelegramme 48 Broadcast-Telegramme sein, die die Steuereinheit 12 an alle E/A-Einheiten 14, 16, 18, 20 gleichzeitig versendet. In bevorzugten Ausführungsbeispielen sendet die Steuereinheit 12 jedoch ein Abfragetelegramm 48 an jeweils eine E/A-Einheit. Die angesprochene E/A-Einheit (hier beispielsweise die E/A-Einheit 18) ist in dem Abfragetelegramm 48 adressiert. Das Abfragetelegramm 48 besitzt zu diesem Zweck einen Telegrammkopf oder Header, in dem die Adresse enthalten ist. Außerdem enthält das Telegramm eine Datensicherungsteil, beispielsweise in Form einer CRC Prüfsumme.

Die Steuereinheit 12 erwartet innerhalb eines definierten (zweiten) Zeitintervalls ab dem Versenden des Abfragetelegramms ein Antworttelegramm 50 von der adressierten E/A-Einheit 18. Nach Ablauf des definierten zweiten Zeitintervalls sendet die Steuereinheit 12 das nächste Abfragetelegramm 48 an die nächste E/A-Einheit in der definierten Abfolge der E/A-Einheiten. Jede E/A-Einheit erwartet ein Abfragetelegramm 48 innerhalb von definierten (ersten) Zeitintervallen, die sich aus der Dauer der zweiten Zeitintervalle und der Anzahl der E/A-Einheiten ergeben. In dem bevorzugten Ausführungsbeispiel werden die E/A-Einheiten 14, 16, 18, 20 also der Reihe nach von der Steuereinheit 12 aufgerufen, und sie antworten jeweils mit einem Antworttelegramm 50. Die Antworttelegramme 50 dienen einerseits als Bestätigung, die der Steuereinheit 12 signalisiert, dass die adressierte E/A-Einheit das Abfragetelegramm 48 empfangen hat. Andererseits übertragen die E/A-Einheiten 14, 16, 18, 20 ihre Sendedaten mit Hilfe der Antworttelegramme 50 an die Steuereinheit 12.

Es ist auch möglich, dass die Steuereinheit 12 verschiedene Arten von Abfragetelegrammen 48 an die E/A-Einheiten 14, 16, 18, 20 versendet und es dementsprechend verschiedene Arten von Antworttelegrammen 50 gibt. Für die Realisierung des neuen Verfahrens spielen Unterschiede zwischen den verschiedenen Telegrammen jedoch keine Rolle, weshalb hier lediglich zwischen Abfragetelegrammen 48 von der Steuereinheit 12 und Antworttelegrammen 50 von den E/A-Einheiten unterschieden ist.

Jedes Telegramm wird mit Hilfe der hochfrequenten Funksignale 44, 46 übertragen. Die Funksignale 44, 46 verwenden eine Sendefrequenz 52, die in bekannter Weise moduliert ist, um die Telegrammdaten zu codieren. Die Sendefrequenzen 52 werden hier nur gewechselt, wenn die Funksignale 44, 46 so gestört sind, dass die Telegramme 48, 50 vom jeweiligen Adressaten nicht mehr empfangen und decodiert werden können.

Wie anhand der E/A-Einheit 16 dargestellt ist, besitzen die E/A-Einheiten hier jeweils einen Daten- und Signalverarbeitungsteil 54, der ebenfalls mit zwei redundanten Prozessoren 56a, 56b dargestellt ist. In diesem Ausführungsbeispiel sind die E/A-Einheiten 14, 16, 18, 20 fehlersicher im Sinne der Kategorie 3 oder höher der EN 954-1, SIL 3 oder vergleichbarer Sicherheitsanforderungen. Für nicht-sicherheitsrelevante Anwendungen könnten die E/A-Einheiten 14, 16, 18, 20 einkanalig ausgebildet sein. Des Weiteren können anstelle von Mikroprozessoren andere Signal- und Datenverarbeitungsschaltkreise verwendet werden, beispielsweise FPGAs (Field Programmable Gate Array).

In der Steuereinheit 12 und in den E/A-Einheiten 14, 16, 18, 20 ist jeweils eine Frequenzsprungtabelle 58 in einem geeigneten Speicher hinterlegt. In einem Ausführungsbeispiel kann der Speicher eine Chipkarte sein, die in eine entsprechende Chipkartenaufnahme am Gehäuse der Steuereinheit oder E/A-Einheit eingesteckt wird. Auf dieser Chipkarte können weitere Konfigurationsdaten, wie insbesondere die individuelle Adresse der Einheit und/oder eine Systemadresse enthalten sein.

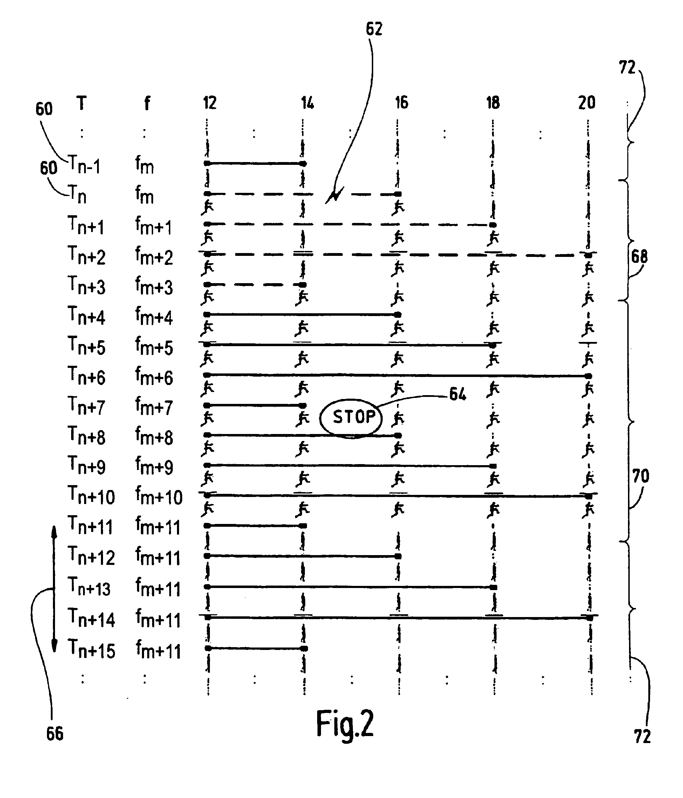

Fig. 2 zeigt den grundsätzlichen Ablauf eines bevorzugten Ausführungsbeispiel des neuen Verfahrens anhand einer zeitlichen und räumlichen Darstellung. Mit den Bezugsziffern 12, 14, 16, 18, 20 sind fünf Spalten überschrieben, die für die Steuereinheit 12 und die E/A-Einheiten 14, 16, 18, 20 repräsentativ sind. Links daneben befinden sich zwei weitere Spalten, die mit T und f überschrieben sind. Die Spalte T bezeichnet die Telegrammtakte Tₙ, d.h. die (zweiten) Zeitintervalle, die mit dem Absenden eines Abfragetelegramms 48 von der Steuereinheit 12 beginnen und innerhalb derer die Steuereinheit 12 ein Antworttelegramm 50 erwartet. Der Telegrammverkehr ist durch Linien zwischen der Steuereinheit 12 und der jeweils adressierten E/A-Einheit 14, 16, 18, 20 symbolisiert. Eine durchgezogene Linie symbolisiert einen erfolgreichen Telegrammverkehr zwischen der Steuereinheit 12 und der adressierten E/A-Einheit. Eine gestrichelte Linie symbolisiert einen Telegrammverkehr, bei dem zumindest eines der beiden Telegramme (Abfragetelegramm, Antworttelegramm) ausbleibt.

In der mit f überschriebenen Spalte ist die für den Telegrammverkehr verwendete Sendefrequenz fₙ angegeben.

Des Weiteren symbolisiert ein "springendes Männchen" einen Frequenzsprung von einer Sendefrequenz zur nächsten, wobei die Abfolge der Frequenzsprünge nach dem einheitlichen Muster erfolgt, das in Form der Frequenzsprungtabelle 58 in allen Einheiten gleichermaßen gespeichert ist. Ein "stehendes Männchen" symbolisiert die Beibehaltung der zuvor gewählten Sendefrequenz.

In der obersten Zeile der Fig. 2 ist der Beginn eines Kommunikationszyklus dargestellt, in dem die Steuereinheit 12 ein Abfragetelegramm 48 an die E/A-Einheit 14 sendet. Die E/A-Einheit 14 antwortet innerhalb des (zweiten) Zeitintervalls 60 (Tₙ₋₁) mit einem Antworttelegramm 50, das von der Steuereinheit 12 erfolgreich empfangen wird. Im nächsten Zeitintervall 60 (Tₙ) sendet die Steuereinheit 12 ein Abfragetelegramm 48 an die E/A-Einheit 16. Die E/A-Einheit 16 kann das Abfragetelegramm 48 im dargestellten Beispiel aufgrund einer Störung 62 nicht erfolgreich empfangen. Da das erwartete Abfragetelegramm 48 ausbleibt, beginnt die E/A-Einheit 16 mit den Wechseln der Sendefrequenz nach dem Muster in der Frequenzsprungtabelle 58. Des Weiteren versendet die E/A-Einheit 16 aufgrund des (aus ihrer Sicht) ausgebliebenen Abfragetelegramms 48 kein Antworttelegramm 50 an die Steuereinheit 12. Folglich empfängt die Steuereinheit 12 innerhalb des Zeitintervalls Tₙ kein Antworttelegramm 50, und die Steuereinheit 12 beginnt ebenfalls mit den Frequenzwechseln nach dem für alle Kommunikationsteilnehmer einheitlich definierten Muster.

Im nächsten Telegrammtakt Tₙ₊₁ würde die Steuereinheit 12 eigentlich ein Abfragetelegramm 48 an die E/A-Einheit 18 versenden. Aufgrund der erfolglosen Kommunikation mit der E/A-Einheit 16 im vorhergehenden Telegrammtakt Tₙ versendet die Steuereinheit 12 jedoch kein Abfragetelegramm 48. Dies signalisiert der E/A-Einheit 18, dass das Frequenzsprungverfahren initiiert werden soll. In gleicher Weise signalisiert die Steuereinheit 12 den weiteren E/A-Einheiten 20 und 14 durch Unterdrücken des Abfragetelegramms 48, dass das Frequenzsprungverfahren initiiert werden soll. Beginnend mit der Störung 82 wird also ein Störzyklus 68 durchlaufen, in dessen Folge die Steuereinheit 12 die Abfragetelegramme 48 zu allen E/A-Einheiten 14, 18, 20 unterdrückt, die nach der gescheiterten Kommunikation mit der E/A-Einheit 16 adressiert worden wären.

An den Störzyklus 68 schließt sich ein Sammelzyklus 70 an. Während des Sammelzyklus springen alle Einheiten 12 bis 20 entsprechend dem einheitlichen Muster in allen gespeicherten Frequenzsprungtabellen 58 in gleicher Reihenfolge und zu gleichen Zeitpunkten von einer Sendefrequenz 52 zur nächsten. Jede Station besitzt zu diesem Zweck einen internen Taktgenerator, der die Zeitpunkte für den Frequenzwechsel bestimmt. Die internen Taktgeneratoren aller Stationen laufen zumindest weitgehend gleich und sie werden anhand der Telegramme bei ungestörtem Datenverkehr regelmäßig miteinander synchronisiert. Vorzugsweise synchronisiert jede E/A-Einheit 14 bis 20 ihren internen Taktgenerator mit dem internen Taktgenerator der Steuereinheit 12 bei jedem empfangenen Abfragetelegramm. Aufgrund dieser regelmäßigen Synchronisation springen die Einheiten 12 bis 20 während des Störzyklus 68 und während des Sammelzyklus 70 praktisch zeitgleich.

Ungeachtet der Frequenzsprünge versendet die Steuereinheit 12 nun wieder Abfragetelegramme 48 an die E/A-Einheiten 14 bis 20. Die Steuereinheit 12 verwendet für die Abfragetelegramme 48 zu Beginn des Sammelzyklus 70 eine Frequenz fₘ₊₄, die sich von der Sendefrequenz fₘ, bei der die Störung 62 auftrat, um n = 4 Frequenzsprünge unterscheidet, wobei die Anzahl n gleich der Anzahl der beteiligten E/A-Einheiten 14 bis 20 ist. Wie in Fig. 2 dargestellt ist, versendet die Steuereinheit 12 das nächste Abfragetelegramm hier wieder an die E/A-Einheit 16, bei der zuvor die Störung in der Kommunikation auftrat. Wenn die Datenkommunikation auf der neuen Frequenz fₘ₊₄ erfolgreich ist, d.h. wenn sowohl das Abfragetelegramm 48 als auch das Antworttelegramm 50 erfolgreich empfangen werden konnten, sendet die Steuereinheit 12 im nächsten Telegrammtakt Tₙ₊₅ das nächste Abfragetelegramm 48 an die nächste E/A-Einheit 18. Dabei springen sämtliche Einheiten weiterhin in dem definierten Muster von einer Sendefrequenz zur nächsten.

Nach dem Telegrammtakt Tₙ₊₇ hat die Steuereinheit 12 von allen E/A-Einheiten 14 bis 20 ein Antworttelegramm 50 erfolgreich erhalten. Im Telegrammtakt Tₙ₊₈ sendet die Steuereinheit 12 ein Abfragetelegramm an die E/A-Einheit 16, das einen Frequenzsprungstoppbefehl 64 beinhaltet. Die Steuereinheit 12 teilt der E/A-Einheit 16 mit, dass das Frequenzsprungverfahren beendet werden soll. In gleicher Weise teilt die Steuereinheit 12 den weiteren E/A-Einheiten 18, 20, 14 in den nächsten Telegrammtakten mit, dass das Frequenzsprungverfahren beendet werden soll. Jede angesprochene E/A-Einheit quittiert den Frequenzsprungstoppbefehl 64 mit einem entsprechenden Antworttelegramm 50. Wenn die Steuereinheit 12 von allen beteiligten E/A-Einheiten 14 bis 20 ein Antworttelegramm 50 empfangen hat, endet der Sammelzyklus und es beginnt wieder ein "normaler" Kommunikationszyklus 72 unter Verwendung der zuletzt ausgewählten Sendefrequenz, die ab nun beibehalten wird, solange es nicht zu einer weiteren Störung der Kommunikation kommt.

Wie in Fig. 2 dargestellt ist, springen die Einheiten nach Erhalt des Frequenzsprungstoppbefehls 64 noch mehrere Telegrammtakte weiter, um zu gewährleisten, dass alle E/A-Einheiten 14 bis 20 am Ende des Sammelzyklus bei derselben Sendefrequenz angelangt sind. Die Anzahl der weiteren Frequenzsprünge nach erstmaligem Versenden des Stoppbefehls entspricht der Anzahl der E/A-Einheiten minus 1.

Mit der Bezugsziffer 66 ist ein (erstes) Zeitintervall bezeichnet, innerhalb dessen jede E/A-Einheit 14 bis 20 den Empfang eines Abfragetelegramms 48 erwartet. Das Zeitintervall 66 ergibt sich aus der Anzahl der E/A-Einheiten multipliziert mit dem Zeitintervall 60 für einen Telegrammtakt.

Insgesamt verwendet das neue Verfahren also eine für alle Einheiten synchrone Telegrammuhr, anhand der die Einheiten 12 bis 20 die Telegrammtakte Tₙ bestimmen. Wenn innerhalb von ersten oder zweiten Zeitintervallen, die sich aus den Telegrammtakten ergeben, ein erwartetes Empfangstelegramm ausbleibt, beginnt jede Einheit mit dem Frequenzsprungverfahren. Die Einheiten wechseln ihre Sende- und Empfangsfrequenz von einem Telegrammtakt zum nächsten nach dem definierten, für alle Einheiten gleichen Muster, das in Form einer Frequenzsprungtabelle in jeder Einheit gespeichert ist. Wenn alle Einheiten das Frequenzsprungverfahren durchführen, erfolgt ein Sammelzyklus, in dem die Steuereinheit 12 zunächst die Datenkommunikation mit den E/A-Einheiten einzeln wieder aufnimmt und anschließend einen Frequenzsprungstoppbefehl an jede Einheit versendet. Nachdem also alle Stationen synchron von einer Sendefrequenz zur nächsten gesprungen sind, wird das Frequenzsprungverfahren koordiniert beendet. Am Ende verwenden alle Einheiten die neue Sendefrequenz, bis eine weitere Störung 62 auftritt und das Frequenzsprungverfahren erneut initiiert wird.

In bevorzugten Ausführungsbeispielen führt allerdings nicht jede einzelne Störung 62 zum Initiieren des Frequenzwechsels. Vielmehr besitzt jede Einheit einen Fehlerspeicher 74, in dem die Anzahl der ausgefallenen erwarteten Empfangstelegramme gespeichert wird. Wenn der Fehlerspeicher eine definierte Fehlerzahl überschreitet, beispielsweise drei aufeinander folgende Fehler, unterdrückt die entsprechende Station das Versenden ihrer Datentelegramme. Dies signalisiert der Steuereinheit und den anderen E/A-Einheiten, dass das Frequenzsprungverfahren initiiert werden soll. In Ausführungsbeispielen kann vorgesehen sein, dass der Fehlerspeicher nach jedem erfolgreichen Empfang eines Telegramms zurückgesetzt wird.

Aufgrund des Fehlerspeichers in jeder Einheit ist es möglich, dass die Steuereinheit 12 die Abfragetelegramme 48 streng nach der Abfolge der E/A-Einheiten versendet. Wird die Datenkommunikation in einem Telegrammtakt gestört, sendet die Steuereinheit 12 das Abfragetelegramm an die durch die Störung beeinträchtigte E/A-Einheit erst im nächsten vollständigen Kommunikationszyklus. In anderen Ausführungsbeispielen kann vorgesehen sein, dass die Steuereinheit 12 das Abfragetelegramm direkt nach einer gescheiterten Datenkommunikation an dieselbe E/A-Einheit versendet.

In bevorzugten Ausführungsbeispielen wird die Frequenzsprungtabelle 58 unter Berücksichtigung von vorhandenen Frequenzbelegungen erstellt. Beispielsweise werden Frequenzbereiche innerhalb des 2,4 GHz-Frequenzbandes ausgelassen, die für leistungsstarke RFID-Übertragungen vorgesehen sind. Des Weiteren kann es vorteilhaft sein, länder- oder ortsabhängig bestimmte Sendefrequenzen zu sperren.

## Patentansprüche

1. Verfahren zum Übertragen von Daten zwischen einer Steuereinheit (12) und einer Vielzahl von abgesetzten E/A-Einheiten (14, 16, 18, 20) einer automatisierten Anlage (10), mit den Schritten:
- Versenden einer Vielzahl von Abfragetelegrammen (48) von der Steuereinheit (12) zu den E/A-Einheiten (14, 16, 18, 20), und
- Versenden einer Vielzahl von Antworttelegrammen (50) von den E/A-Einheiten (14, 16, 18, 20) an die Steuereinheit (12),
- wobei die Abfragetelegramme (48) und die Antworttelegramme (50) mit Hilfe von Hochfrequenzsignalen (52) versendet werden, deren Sendefrequenzen nach einem definierten Muster (58) gewechselt werden,
**dadurch gekennzeichnet, dass** die E/A-Einheiten (14, 16, 18, 20) den Empfang eines Abfragetelegramms (48) innerhalb von definierten ersten Zeitintervallen (66) erwarten, und dass die Steuereinheit (12) den Empfang von zumindest einem Antworttelegramm (50) innerhalb von definierten zweiten Zeitintervallen (60) erwartet, wobei die Steuereinheit (12) und die E/A-Einheiten (14, 16, 18, 20) eine gewählte Sendefrequenz beibehalten, solange die Abfragetelegramme (48) und Antworttelegramme (50) innerhalb der definierten Zeitintervalle (60, 66) empfangen werden, und wobei die Steuereinheit (12) und die E/A-Einheiten (14, 16, 18, 20) die Sendefrequenzen nach dem definierten Muster wechseln, wenn innerhalb der definierten Zeitintervalle (60, 66) kein erwartetes Telegramm empfangen wird.

2. Verfahren nach Anspruch 1, **dadurch gekennzeichnet, dass** die Steuereinheit (12) und die E/A-Einheiten (14, 16, 18, 20) die Sendefrequenzen nur dann nach dem definierten Muster wechseln, wenn innerhalb der definierten Zeitintervalle (60, 66) kein erwartetes Telegramm empfangen wird.

3. Verfahren nach Anspruch 1 oder 2, **dadurch gekennzeichnet, dass** die Steuereinheit (12) und die E/A-Einheiten (14, 16, 18, 20) die Sendefrequenzen nur dann nach dem definierten Muster wechseln, wenn innerhalb mehrerer definierter Zeitintervalle (60, 66) kein erwartetes Telegramm empfangen wird.

4. Verfahren nach einem der Ansprüche 1 bis 3, **dadurch gekennzeichnet, dass** die Steuereinheit (12) die Abfragetelegramme (48) in einer definierten Abfolge an die E/A-Einheiten (14, 16, 18, 20) sendet, wobei die Steuereinheit (12) das Versenden der Abfragetelegramme (48) für eine definierte Zeitdauer (68) einstellt, wenn ein erwartetes Antworttelegramm (50) ausbleibt.

5. Verfahren nach Anspruch 4, **dadurch gekennzeichnet, dass** die definierte Zeitdauer (68) zumindest gleich der Länge des zweiten Zeitintervalls (60) multipliziert mit der Anzahl der E/A-Einheiten (14, 16, 18, 20) der definierten Abfolge minus 1 ist.

6. Verfahren nach einem der Ansprüche 1 bis 5, **dadurch gekennzeichnet, dass** die Steuereinheit (12) einen Frequenzwechselstoppbefehl (64) an die E/A-Einheiten (14, 16, 18, 20) sendet, wenn sie von allen angesprochenen E/A-Einheiten (14, 16, 18, 20) ein Antworttelegramm (50) innerhalb der definierten zweiten Zeitintervalle (60) empfangen hat.

7. Verfahren nach einem der Ansprüche 1 bis 6, **dadurch gekennzeichnet, dass** die Steuereinheit (12) ein Abfragetelegramm (48) mit einer aktuellen Sendefrequenz (52) nur versendet, wenn die aktuelle Sendefrequenz frei ist.

8. Verfahren nach einem der Ansprüche 1 bis 7, **dadurch gekennzeichnet, dass** Sendefrequenzen (52), bei denen Antworttelegramme (50) wiederholt ausbleiben, aus dem definierten Muster (58) entfernt werden

9. Verfahren nach einem der Ansprüche 1 bis 8, **dadurch gekennzeichnet, dass** das Muster (58) eine Abfolge von verschiedenen Sendefrequenzen (52) aus einer Gruppe von Sendefrequenzen definiert, wobei die Sendefrequenzen (52) in der Abfolge mit maximalen relativen Frequenzunterschieden angeordnet sind.

10. Automatisiert arbeitende Anlage, mit einer Steuereinheit (12) und mit einer Vielzahl von abgesetzten E/A-Einheiten (14, 16, 18, 20), wobei die Steuereinheit (12) mit den E/A-Einheiten (14, 16, 18, 20) kommuniziert, um Zustandsdaten der Anlage von den E/A-Einheiten (14, 16, 18, 20) einzulesen und um Steuerbefehle an die E/A-Einheiten (14, 16, 18, 20) auszugeben, wobei die Steuereinheit (12) dazu ausgebildet ist, eine Vielzahl von Abfragetelegrammen (48) zu den E/A-Einheiten (14, 16, 18, 20) zu versenden und eine Vielzahl von Antworttelegrammen (50) von den E/A-Einheiten (14, 16, 18, 20) zu empfangen, wobei die E/A-Einheiten (14, 16, 18, 20) dazu ausgebildet sind, die Abfragetelegramme (48) zu empfangen und in Abhängigkeit davon die Antworttelegramme (50) zu versenden, und wobei die Steuereinheit (12) und die E/A-Einheiten (14, 16, 18, 20) jeweils dazu ausgebildet sind, Sendefrequenzen (52) für die Abfragetelegramme (48) und Antworttelegramme (50) nach einem definierten Muster (58) zu wechseln, **dadurch gekennzeichnet, dass** die E/A-Einheiten (14, 16, 18, 20) den Empfang eines Abfragetelegramms (48) innerhalb von definierten ersten Zeitintervallen (66) erwarten, und dass die Steuereinheit (12) den Empfang von zumindest einem Antworttelegramm (50) innerhalb von definierten zweiten Zeitintervallen (60) erwartet, wobei die Steuereinheit (12) und die E/A-Einheiten (14, 16, 18, 20) eine gewählte Sendefrequenz (52) beibehalten, solange die Abfragetelegramme (48) und Antworttelegramme (50) innerhalb der definierten Zeitintervalle (60, 66) empfangen werden, und wobei die Steuereinheit (12) und die E/A-Einheiten (14, 16, 18, 20) die Sendefrequenzen (52) nach dem definierten Muster wechseln, wenn innerhalb der definierten Zeitintervalle (60, 66) kein erwartetes Telegramm empfangen wird.

11. Steuereinheit für eine automatisiert arbeitende Anlage (10), mit Sendemitteln zum Versenden von Abfragetelegrammen (48) und mit Empfangsmitteln zum Empfangen von Antworttelegrammen (50), wobei die Sendemittel und Empfangsmittel dazu ausgebildet sind, ein Verfahren nach einem der Ansprüche 1 bis 9 zu implementieren.

12. E/A-Einheit für eine automatisiert arbeitende Anlage, mit Empfangsmitteln zum Empfangen von Abfragetelegrammen (48) und mit Sendemitteln zum Versenden von Antworttelegrammen (50), wobei die Sendemittel und Empfangsmittel dazu ausgebildet sind, ein Verfahren nach einem der Ansprüche 1 bis 9 zu implementieren.

## Claims

1. A method for transmitting data between a control unit (12) and a plurality of remote I/O units (14, 16, 18, 20) in an automated installation (10), the method comprising steps of
- transmitting a plurality of request messages (48) from the control unit (12) to the I/O units (14, 16, 18, 20), and
- transmitting a plurality of response messages (50) from the I/O units (14, 16, 18, 20) to the control unit (12),
- wherein the request messages (48) and the response messages (50) are transmitted using radio-frequency signals (52), the transmission frequencies of which are changed on the basis of a defined pattern (58),
**characterized in that** the I/O units (14, 16, 18, 20) expect to receive a request message (48) within defined first time intervals (66), and the control unit (12) expects to receive at least one response message (50) within defined second time intervals (60), wherein the control unit (12) and the I/O units (14, 16, 18, 20) maintain a selected transmission frequency for as long as the request messages (48) and response messages (50) are received within the defined time intervals (60, 66), and wherein the control unit (12) and the I/O units (14, 16, 18, 20) change the transmission frequencies on the basis of the defined pattern if no expected message is received within the defined time intervals (60, 66).

2. The method of claim 1, **characterized in that** the control unit (12) and the I/O units (14, 16, 18, 20) change the transmission frequencies on the basis of the defined pattern only if no expected message is received within the defined time intervals (60, 66).

3. The method of claim 1 or 2, **characterized in that** the control unit (12) and the I/O units (14, 16, 18, 20) change the transmission frequencies on the basis of the defined pattern only if no expected message is received within a plurality of defined time intervals (60, 66).

4. The method of one of claims 1 to 3, **characterized in that** the control unit (12) sends the request messages (48) to the I/O units (14, 16, 18, 20) in a defined sequence, wherein the control unit (12) stops sending the request messages (48) for a defined period (68) if an expected response message (50) is absent.

5. The method of claim 4, **characterized in that** the defined period (68) is at least equal to the length of the second time interval (60) multiplied by the number of I/O units (14, 16, 18, 20) in the defined sequence minus 1.

6. The method of one of claims 1 to 5, **characterized in that** the control unit (12) sends a frequency change stop command (64) to the I/O units (14, 16, 18, 20) if it has received a response message (50) from all the addressed I/O units (14, 16, 18, 20) within the defined second time intervals (60).

7. The method of one of claims 1 to 6, **characterized in that** the control unit (12) sends a request message (48) at a current transmission frequency (52) only if the current transmission frequency is free.

8. The method of one of claims 1 to 7, **characterized in that** transmission frequencies (52) at which response messages (50) are repeatedly absent are removed from the defined pattern (58).

9. The method of one of claims 1 to 8, **characterized in that** the pattern (58) defines a sequence of different transmission frequencies (52) from a group of transmission frequencies, wherein the transmission frequencies (52) are arranged in the sequence with maximum relative frequency differences.

10. An automatically operating installation, comprising a control unit (12) and a plurality of remote I/O units (14, 16, 18, 20), wherein the control unit (12) communicates with the I/O units (14, 16, 18, 20) in order to read in state data for the installation from the I/O units (14, 16, 18, 20) and in order to output control commands to the I/O units (14, 16, 18, 20), wherein the control unit (12) is designed to transmit a plurality of request messages (48) to the I/O units (14, 16, 18, 20) and to receive a plurality of response messages (50) from the I/O units (14, 16, 18, 20), wherein the I/O units (14, 16, 18, 20) are designed to receive the request messages (48) and, on the basis thereof, to transmit the response messages (50), and wherein the control unit (12) and the I/O units (14, 16, 18, 20) each are designed to change transmission frequencies (52) for the request messages (48) and response messages (50) on the basis of a defined pattern (58), **characterized in that** the I/O units (14, 16, 18, 20) expect to receive a request message (48) within defined first time intervals (66), and that the control unit (12) expects to receive at least one response message (50) within defined second time intervals (60), wherein the control unit (12) and the I/O units (14, 16, 18, 20) maintain a selected transmission frequency (52) for as long as the request messages (48) and response messages (50) are received within the defined time intervals (60, 66), and wherein the control unit (12) and the I/O units (14, 16, 18, 20) change the transmission frequencies (52) on the basis of the defined pattern if no expected message is received within the defined time intervals (60, 66).

11. A control unit for an automatically operating installation (10), comprising a transmitter for transmitting request messages (48) and comprising a receiver for receiving response messages (50), wherein the transmitter and the receiver are designed to implement a method of one of claims 1 to 9.

12. An I/O unit for an automatically operating installation, comprising a receiver for receiving request messages (48) and comprising a transmitter for transmitting response messages (50), wherein the transmitter and the receiver are designed to implement a method of one of claims 1 to 9.

## Revendications

1. Procédé de transmission de données entre une unité de commande (12) et une pluralité d'unités d'E/S déportées (14, 16, 18, 20) d'une installation automatisée (10), comprenant les étapes suivantes:
envoi d'une pluralité de télégrammes d'interrogation (48) de l'unité de commande (12) vers les unités d'E/S (14, 16, 18, 20) et
envoi d'une pluralité de télégrammes de réponse (50) des unités d'E/S (14, 16, 18, 20) vers l'unité de commande (12),
les télégrammes d'interrogation (48) et les télégrammes de réponse (50) étant envoyés à l'aide de signaux à haute fréquence (52) dont les fréquences d'émission sont modifiées en fonction d'un modèle défini (58),
**caractérisé en ce que** les unités d'E/S (14, 16, 18, 20) attendent la réception d'un télégramme d'interrogation (48) pendant des premiers intervalles de temps (66) définis et **en ce que** l'unité de commande (12) attend la réception d'au moins un télégramme de réponse (50) pendant des deuxièmes intervalles de temps (60) définis, l'unité de commande (12) et les unités d'E/S (14, 16, 18, 20) conservant une fréquence d'émission choisie tant que les télégrammes d'interrogation (48) et les télégrammes de réponse (50) sont reçus pendant les intervalles de temps (60, 66) définis et l'unité de commande (12) et les unités d'E/S (14, 16, 18, 20) modifiant les fréquences d'émission d'après le modèle défini si aucun télégramme attendu n'est reçu pendant les intervalles de temps (60, 66) définis.

2. Procédé selon la revendication 1, **caractérisé en ce que** l'unité de commande (12) et les unités d'E/S (14, 16, 18, 20) ne modifient les fréquences d'émission d'après le modèle défini que si aucun télégramme attendu n'est reçu pendant les intervalles de temps (60, 66) définis.

3. Procédé selon la revendication 1 ou 2, **caractérisé en ce que** l'unité de commande (12) et les unités d'E/S (14, 16, 18, 20) ne modifient les fréquences d'émission d'après le modèle défini que si aucun télégramme attendu n'est reçu pendant plusieurs intervalles de temps (60, 66) définis.

4. Procédé selon l'une des revendications 1 à 3, **caractérisé en ce que** l'unité de commande (12) envoie les télégrammes d'interrogation (48) selon une séquence définie aux unités d'E/S (14, 16, 18, 20), l'unité de commande (12) interrompant l'envoi des télégrammes d'interrogation (48) pendant une durée définie (68) si un télégramme de réponse (50) attendu n'arrive pas.

5. Procédé selon la revendication 4, **caractérisé en ce que** la durée définie (68) est au moins égale à la durée du deuxième intervalle de temps (60) multipliée par le nombre d'unités d'E/S (14, 16, 18, 20) de la séquence définie moins 1.

6. Procédé selon l'une des revendications 1 à 5, **caractérisé en ce que** l'unité de commande (12) envoie une instruction d'arrêt du changement de fréquence (64) aux unités d'E/S (14, 16, 18, 20) si elle a reçu de la part de toutes les unités d'E/S (14, 16, 18, 20) sollicitées un télégramme de réponse (50) pendant le deuxième intervalle de temps (60) défini.

7. Procédé selon l'une des revendications 1 à 6, **caractérisé en ce que** l'unité de commande (12) n'envoie un télégramme d'interrogation (48) à une fréquence d'émission actuelle (52) que lorsque la fréquence d'émission actuelle est libre.

8. Procédé selon l'une des revendications 1 à 7, **caractérisé en ce que** les fréquences d'émission (52) auxquelles les télégrammes de réponse (50) n'arrivent pas de manière répétitive sont supprimées du modèle défini (58).

9. Procédé selon l'une des revendications 1 à 8, **caractérisé en ce que** le modèle (58) définit une séquence de différentes fréquences d'émission (52) à partir d'un groupe de fréquences d'émission, les fréquences d'émission (52) étant organisées dans la séquence avec des différences de fréquence relatives maximales.

10. Installation à fonctionnement automatisé, comprenant une unité de commande (12) et une pluralité d'unités d'E/S déportées (14, 16, 18, 20), l'unité de commande (12) communiquant avec les unités d'E/S (14, 16, 18, 20) afin de lire des données d'état de l'installation auprès des unités d'E/S (14, 16, 18, 20) et afin de délivrer des instructions de commande aux unités d'E/S (14, 16, 18, 20), l'unité de commande (12) étant conçue pour envoyer une pluralité de télégrammes d'interrogation (48) aux unités d'E/S (14, 16, 18, 20) et pour recevoir une pluralité de télégrammes de réponse (50) de la part des unités d'E/S (14, 16, 18, 20), les unités d'E/S (14, 16, 18, 20) étant conçues pour recevoir les télégrammes d'interrogation (48) et pour envoyer les télégrammes de réponse (50) en fonction de ceux-ci, et l'unité de commande (12) ainsi que les unités d'E/S (14, 16, 18, 20) étant respectivement conçues pour modifier les fréquences d'émission (52) des télégrammes d'interrogation (48) et des télégrammes de réponse (50) en fonction d'un modèle défini (58), **caractérisée en ce que** les unités d'E/S (14, 16, 18, 20) attendent la réception d'un télégramme d'interrogation (48) pendant des premiers intervalles de temps (66) définis et **en ce que** l'unité de commande (12) attend la réception d'au moins un télégramme de réponse (50) pendant des deuxièmes intervalles de temps (60) définis, l'unité de commande (12) et les unités d'E/S (14, 16, 18, 20) conservant une fréquence d'émission (52) choisie tant que les télégrammes d'interrogation (48) et les télégrammes de réponse (50) sont reçus pendant les intervalles de temps (60, 66) définis et l'unité de commande (12) et les unités d'E/S (14, 16, 18, 20) modifiant les fréquences d'émission (52) d'après le modèle défini si aucun télégramme attendu n'est reçu pendant les intervalles de temps (60, 66) définis.

11. Unité de commande pour une installation à fonctionnement automatisé (10), comprenant des moyens d'émission pour envoyer des télégrammes d'interrogation (48) et comprenant des moyens de réception pour recevoir des télégrammes de réponse (50), les moyens d'émission et les moyens de réception étant conçus pour mettre en oeuvre un procédé selon l'une des revendications 1 à 9.

12. Unité d'E/S pour une installation à fonctionnement automatisé, comprenant des moyens de réception pour recevoir des télégrammes d'interrogation (48) et comprenant des moyens d'émission pour envoyer des télégrammes de réponse (50), les moyens d'émission et les moyens de réception étant conçus pour mettre en oeuvre un procédé selon l'une des revendications 1 à 9.
